# EUROPEAN PATENT APPLICATION

(11) **EP 4 421 674 A1**
(43) Date of publication of application: **28.08.2024**
(21) Application number: 23219387.0
(22) Date of filing: 21.12.2023
(51) Int. Cl.: G06F 40/30, G06F 40/20, G06N 3/08, G06N 20/00

(54) **TRAVEL-SPECIFIC NATURAL LANGUAGE PROCESSING SYSTEM**

(30) Priority: 24.02.2023 US 202363486746 P; 08.12.2023 US 202318534384
(71) Applicant: Expedia, Inc., Seattle, Washington 98119 (US)
(72) Inventor: SAMGHABADI, Niloofar Safi, Seattle, Washington 98119 (US); NAJMABADI, Mani, Seattle, Washington 98119 (US); DENG, Zhipin, Bejing 100080 (CN); ZHANG, Li, Los Angeles, California 90066 (US); ZHANG, Kai, Los Angeles, California 90066 (US); XU, Jizheng, Los Angeles, California 90066 (US)
(74) Representative: Marks & Clerk LLP

(57) **Abstract**

Systems and methods for travel-specific natural language processing are disclosed. The techniques described herein include maintaining a first dataset having a standardized text format and a second dataset having a noisy text format, each of which corresponds to a travel-specific lexicon. The techniques include generating training data corresponding to a first training objective and a second training objective based on the first dataset and the second dataset. A machine-learning model can be trained using the training data according to the first and second training objectives.

## Description

### CROSS-REFERENCE TO RELATED APPLICATIONS

This application claims the benefit of and priority to U.S. Provisional Patent Application No. 63/486,746, filed February 24, 2023, and entitled "TRAVEL-SPECIFIC NATURAL LANGUAGE PROCESSING SYSTEM".

### BACKGROUND

Natural language processing models can be trained to recognize meaning from text-based data. However, natural language processing models encounter challenges when presented with domain-specific data. Natural language processing models often fail to recognize and process the nuances and context of information from specific domains, leading to errors or inaccuracies in their outputs.

### SUMMARY

At least one aspect of the present disclosure is directed to a method of training natural language processing models using travel-specific data. The method may be performed, for example, by one or more processors coupled to non-transitory memory. The method includes maintaining a first dataset having a standardized text format and a second dataset having a noisy text format. Each of the first dataset and the second dataset correspond to a travel-specific lexicon. The method includes generating training data corresponding to a first training objective and a second training objective based on the first dataset and the second dataset. The method includes training a travel-specific natural language machine-learning model using the training data according to the first and second training objectives.

In some implementations, the method may include tuning the trained machine-learning model using an additional training set according to a third training objective. In some implementations, maintaining the first dataset includes scraping a plurality of webpages hosted by one or more data sources to retrieve data having the standardized text format.

In some implementations, maintaining the second dataset includes accessing one or more chat logs, social media sources, or peer-to-peer communications maintained by one or more data sources to retrieve data having the noisy text format. In some implementations, the first training objective is masked-language modeling (MLM) and the second training objective is next sentence prediction (NSP). In some implementations, training the machine-learning model includes training the machine-learning model using a first training set according to the first training objective; and subsequently training the machine-learning model using a second training set according to the second training objective.

In some implementations, generating the training data includes generating a plurality of sentence pairs using text data from the first dataset and the second dataset. In some implementations, the plurality of sentence pairs includes a first pair having a first sentence in the standardized text format and a second sentence in the noisy text format. In some implementations, the plurality of sentence pairs comprises a first predetermined number of sentence pairs having at least one sentence in the noisy text format.

At least one other aspect of the present disclosure is directed to a system for training natural language processing models using travel-specific data. The system may include, for example, one or more processors coupled to non-transitory memory. The system can maintain a first dataset having a standardized text format and a second dataset having a noisy text format. Each of the first dataset and the second dataset correspond to a travel-specific lexicon. The system can generate training data corresponding to one or more training objectives based on the first dataset and the second dataset. The system can train a machine-learning model using the training data according to the one or more training objectives.

In some implementations, the system can tune the trained machine-learning model using an additional training set according to a third training objective. In some implementations, the system can maintain the first dataset by performing operations comprising scraping a plurality of webpages hosted by one or more data sources to retrieve data having the standardized text format. In some implementations, the system can maintain the second dataset by performing operations comprising accessing one or more chat logs, social media sources, or peer-to-peer communications maintained by one or more data sources to retrieve data having the noisy text format.

In some implementations, a first training objective is MLM and a second training objective is NSP. In some implementations, the system can train the machine-learning model by performing operations comprising training the machine-learning model using a first training set according to the first training objective; and subsequently training the machine-learning model using a second training set according to the second training objective.

In some implementations, the system can generate the training data by performing operations comprising generating a plurality of sentence pairs using text data from the first dataset and the second dataset. In some implementations, the plurality of sentence pairs comprises a first pair having a first sentence in the standardized text format and a second sentence in the noisy text format. In some implementations, the plurality of sentence pairs comprises a first predetermined number of sentence pairs having at least one sentence in the noisy text format.

Yet another aspect of the present disclosure is directed to a non-transitory computer-readable medium with instructions embodied thereon that, when executed by one or more processors, cause the one or more processors to perform one or more operations. The operations include maintaining a first dataset having a standardized text format and a second dataset have a noisy text format. Each of the first dataset and the second dataset corresponds to a travel-specific lexicon. The operations include generating training data corresponding to one or more training objectives based on the first dataset and the second dataset. The operations include training a machine-learning model using the training data according to the one or more training objectives.

In some implementations, the instructions, when executed by the one or more processors, cause the one or more processors to perform further operations comprising generating a plurality of sentence pairs for the training data using text data from the first dataset and the second dataset. The plurality of sentence pairs may include a first pair having a first sentence in the standardized text format and a second sentence in the noisy text format.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. Aspects may be combined and it will be readily appreciated that features described in the context of one aspect of the present disclosure may be combined with other aspects. Aspects may be implemented in any convenient form. In a non-limiting example, aspects may be implemented by appropriate computer programs, which may be carried on appropriate carrier media (computer readable media), which may be tangible carrier media (e.g., disks) or intangible carrier media (e.g., communications signals). Aspects may also be implemented using suitable apparatus, which may take the form of programmable computers running computer programs arranged to implement the aspect. As used in the specification and in the claims, the singular form of "a," "an," and "the" include plural referents unless the context clearly dictates otherwise.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 illustrates an example system for training machine-learning models using travel-specific data, in accordance with one or more implementations;
FIG. 2A depicts a block diagram of an architecture of an example machine-learning model during a training phase using the techniques described herein, in accordance with one or more implementations;
FIG. 2B depicts a block diagram of an architecture of the example machine-learning model of FIG. 2A during a tuning phase, in accordance with one or more implementations;
FIG. 3A depicts a block diagram of an architecture of an example transformer layer that may be utilized in implementations of the example machine-learning model of FIGS. 2A and 2B, in accordance with one or more implementations;
FIG. 3B depicts a block diagram of an example adapter layer that may be implemented as part of the transformer layer depicted in FIG. 3A, in accordance with one or more implementations;
FIG. 4 depicts a flowchart of an example method of training machine-learning models using a hybrid dataset including standard and noisy data, in accordance with one or more implementations; and
FIG. 5 is a block diagram of an example computing system suitable for use in the various arrangements described herein, in accordance with one or more example implementations.

### DETAILED DESCRIPTION

Below are detailed descriptions of various concepts related to and implementations of techniques, approaches, methods, apparatuses, and systems for training natural language processing models for travel-specific data, which may include generating training data using standardized and noisy datasets. The various concepts introduced above and discussed in detail below may be implemented in any of numerous ways, as the described concepts are not limited to any particular manner of implementation. Examples of specific implementations and applications are provided primarily for illustrative purposes.

Generalized natural language processing models encounter challenges when presented with domain-specific data. In particular, natural language processing models often fail to recognize and process the nuances and context of information from specific domains, leading to errors or inaccuracies in their outputs. Generalized natural language models that are tuned for domain-specific tasks cannot produce useful output due to these challenges. These issues become particularly pronounced as the variety of the data input to the model increases. One such domain with a large variety of input text is travel-related data.

Travel-related natural language has distinct characteristics, including distinct vocabulary, the presence of errors due in part to having a conversational format, and dynamically changing cultural trends and meanings. As described herein, travel data may include data in a conversational format (e.g., grammatical errors, punctuation or capitalization errors, spelling errors, formatting errors, etc.). Such conversational data is sometimes referred to herein as "noisy" data.

Compared to standard language, travel-specific language has a diverse vocabulary. For example, travel data may include a large variety of names for locations (e.g., countries, cities, sites, points of interests etc.), hotels, airlines, car provider names, amenities, and activities (e.g., hiking, shopping, sightseeing, couch surfing, etc.), among others. The diverse vocabulary of travel-related language results in challenges when utilizing generalized natural language models for travel domain-specific tasks, such as classification or text generation.

Additionally, travel-specific language may be error-prone (e.g., noisy data). Conversational language generated by users tends to have errors, such as misspellings and incorrect grammar. This issue is exacerbated in travel-related data because travelers may not be familiar with the proper names of different destinations or activities. For example, a native English speaker is very likely to misspell names of places in France. Travel-related text data therefore has a hybrid nature, because it includes noisy data (e.g., chats with humans or virtual agents) combined with standard and accurate types of language (e.g., reviews, property descriptions, etc.).

Moreover, travel-related text data is dynamic because its travel-related meanings change over time. Particularly, travel-related language changes at a faster pace compared to standard language in a society. Discovering new places, activities and experiences is one of the main reasons for travel, and the language naturally follows popular trends (e.g., today's new hot destination was nearly unknown two years ago). This is another distinctive feature of travel domain data and often causes inaccuracies or errors when new or changed terms are utilized in generalized natural language processing models.

The systems and methods described herein implement a hybrid approach to training natural language processing models for travel domain-specific data. The hybrid approach to training addresses the issues arising from generally trained natural language processing models, resulting in increased accuracy and a reduction in errors. Existing approaches to training natural language models utilize a large corpus of standard generic data that does not include spelling errors, grammatical errors, capitalization or punctuation errors, or formatting errors, among other errors. The techniques described herein can be utilized to train a natural language model on a hybrid dataset, which includes both noisy data and standardized data. The approaches to training the model described herein adapt to the hybrid nature of the dataset.

Approaches that do not utilize hybrid training datasets that include both noisy data and standardized data suffer from poor performance and accuracy. These difficulties are particularly pronounced in fields in which the vernacular changes rapidly or where errors may be more common (e.g., travel-specific text data). One advantage of training a machine-learning model using both noisy and standardized training data is the machine-learning model becomes more flexible to handling a variety of input, including different types of errors, conversational language, nicknames, or up-to-date information, while still retaining the advantages of understanding meaning conveyed by conventional sources, which provide structured data that does not have a conversational syntax and may be out-of-date compared to noisy data. Utilizing a hybrid dataset is particularly useful for travel-specific language, because travel-specific language sources tend to be more conversational and trends related to travel change rapidly over time.

The systems and methods described herein therefore address technical issues that are encountered when training machine-learning models for travel domain-specific tasks. To do so, the systems and methods described herein can train a base language model according to a number of training objectives using a hybrid dataset, which includes both noisy text data and structured text data with traditional prose, formatting, and grammatical rules. The hybrid dataset can be updated in real-time or near real-time to account for the latest lingual trends, and the machine-learning model can be iteratively retrained, tuned, or otherwise trained on the up-to-date dataset.

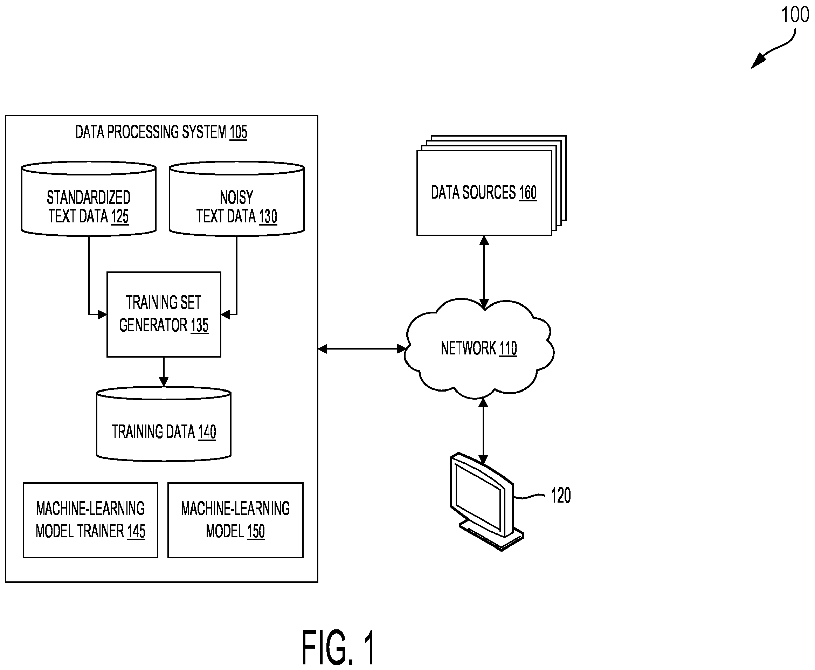

FIG. 1 illustrates an example system 100 for training natural language processing models using travel-specific data, in accordance with one or more implementations. The system 100 includes a data processing system 105, one or more user devices 120, and one or more data sources 160. The data processing system 105 can store standardized text data 125, noisy text data 130, and training data 140. The data processing system 105 includes the training set generator 135, the machine-learning model trainer 145, and one or more machine-learning models 150. Although shown as internal to the data processing system 105, it should be understood that one or more of the standardized text data 125, the noisy text data 130, and the training data 140 may be stored externally to the data processing system 105, for example, as part of a cloud computing system or an external storage medium in communication with the data processing system 105 via the network 110.

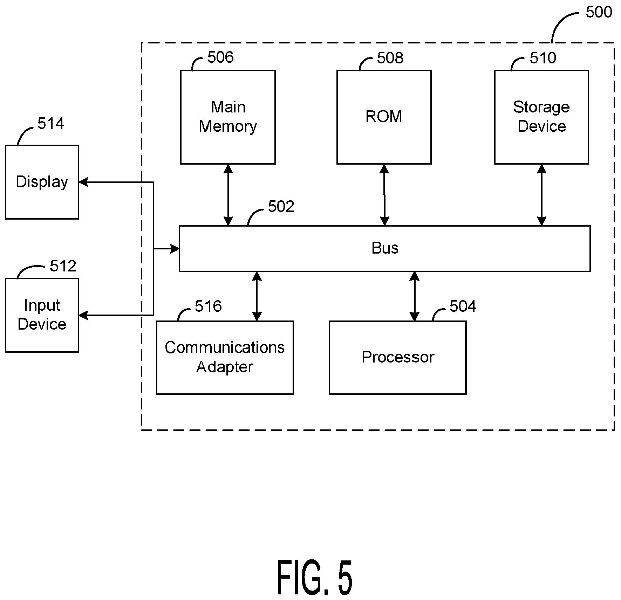

Each component (e.g., the data processing system 105, the network 110, the user devices 120, the data sources 160, the training set generator 135, the machine-learning model trainer 145, the machine-learning model 150, etc.) of the system 100 can be implemented using the hardware components or a combination of software with the hardware components of a computing system, such as the computing system 500 detailed in connection with FIG. 5, or any other computing system described herein. Each component of the data processing system 105 can perform the functionalities detailed herein.

The data processing system 105 can include at least one processor and a memory (e.g., a processing circuit). The memory can store processor-executable instructions that, when executed by a processor, cause the processor to perform one or more of the operations described herein. The processor may include a microprocessor, an application-specific integrated circuit (ASIC), a field-programmable gate array (FPGA), a graphics processing unit (GPU), a tensor processing unit (TPU), etc., or combinations thereof. The memory may include, but is not limited to, electronic, optical, magnetic, or any other storage or transmission device capable of providing the processor with program instructions. The memory may further include a floppy disk, CD-ROM, DVD, magnetic disk, memory chip, ASIC, FPGA, read-only memory (ROM), random-access memory (RAM), electrically erasable programmable ROM (EEPROM), erasable programmable ROM (EPROM), flash memory, optical media, or any other suitable memory from which the processor can read instructions. The instructions may include code from any suitable computer programming language. The data processing system 105 can include one or more computing devices or servers that can perform various functions as described herein. The data processing system 105 can include any or all of the components and perform any or all of the functions of the computer system 500 described herein in conjunction with FIG. 5.

The network 110 can include packet-switching computer networks such as the Internet, local, wide, metro, or other area networks, intranets, satellite networks, other computer networks such as voice or data mobile phone communication networks, or combinations thereof. The data processing system 105 of the system 100 can communicate via the network 110 with one or more computing devices, such as the one or more user devices 120 or the one or more data sources 160. The network 110 may be any form of computer network that can relay information between the data processing system 105, the one or more user devices 120, and one or more information sources, such as web servers or external databases, amongst others. In some implementations, the network 110 may include the Internet and/or other types of data networks, such as a local area network (LAN), a wide area network (WAN), a cellular network, a satellite network, or other types of data networks. The network 110 may also include any number of computing devices (e.g., computers, servers, routers, network switches, etc.) that are configured to receive or transmit data within the network 110.

The network 110 may include any number of hardwired or wireless connections. Any or all of the computing devices described herein (e.g., the data processing system 105, the one or more user devices 120, the data sources 160, etc.) may communicate wirelessly (e.g., via Wi-Fi, cellular communication, radio, etc.) with a transceiver that is hardwired (e.g., via a fiber optic cable, a CAT5 cable, etc.) to other computing devices in the network 110. Any or all of the computing devices described herein (e.g., the data processing system 105, the one or more user devices 120, the data sources 160, etc.) may also communicate wirelessly with the computing devices of the network 110 via a proxy device (e.g., a router, network switch, or gateway).

Each of the user devices 120 can include at least one processor and a memory (e.g., a processing circuit). The memory can store processor-executable instructions that, when executed by the processor, cause the processor to perform one or more of the operations described herein. The processor can include a microprocessor, an ASIC, an FPGA, a GPU, a TPU, etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, ROM, RAM, EEPROM, EPROM, flash memory, optical media, or any other suitable memory from which the processor can read instructions. The instructions can include code from any suitable computer programming language. The user devices 120 can include one or more computing devices or servers that can perform various operations as described herein. The one or more user devices 120 can include any or all of the components and perform any or all of the functions of the computer system 500 described herein in conjunction with FIG. 5.

In some implementations, one or more of the user devices 120 can communicate with one or more chat bots or chat services hosted by external computing systems via the network 110. The user devices 120 can communicate with the chat bots or chat services through a variety of means, such as through a web-based interface provided by the external computing systems or an application executing on a user device 120. The user device 120 can access the chat bot through a web browser or native application, for example, by navigating to a specific website of the external computing system that hosts the chat bot or chat service. Once the website is loaded and presented on the user device 120, a user of the user device 120 can provide text through a text input field, allowing them to ask questions or provide commands. Responses to the user input can be presented by the external computing systems on the user device 120.

In some implementations, a user device 120 can communicate with chat bots or chat services hosted by external computing systems using a natively executing application. For example, the application can be downloaded from the external computing system or from an application distribution platform for execution on the user device 120. Once the app is launched, a user of the user device 120 can provide text input the chat bot through a text input field or by tapping on buttons in the application. Both the text input and the responses can be stored in the one or more data sources 160.

Each of the data sources 160 can include at least one processor and a memory (e.g., a processing circuit). The memory can store processor-executable instructions that, when executed by the processor, cause the processor to perform one or more of the operations described herein. The processor can include a microprocessor, an ASIC, an FPGA, a GPU, a TPU, etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, ROM, RAM, EEPROM, EPROM, flash memory, optical media, or any other suitable memory from which the processor can read instructions. The instructions can include code from any suitable computer programming language. The data sources 160 can include one or more computing devices or servers that can perform various operations as described herein. The one or more data sources 160 can include any or all of the components and perform any or all of the functions of the computer system 500 described herein in conjunction with FIG. 5.

One or more of the data sources 160 may be a computing system that hosts chat bots or chat services, and maintains logs of conversational data provided by the users of the user devices 120 or by agents that provide answers as part of the chat service. Such data sources 160 can store user input text and chat bot (or agent responses), to record logs of all interactions between users and the chat bot or agent, including the user's input and the chat bot's response. Each log may correspond to a respective conversation between a user (e.g., via a user device 120) chatting with a chat bot or agent. The logs can be stored in a database or file system for retrieval and utilization in the various machine-learning techniques described herein. Such data sources 160 may host chat bots or chat services related with travel, and may be maintained by entities such as travel agencies, hotel companies, and/or transportation companies (e.g., airports, train stations, bus travel services, etc.), among other travel-related entities.

The text stored in the chat logs can be conversational in format, due to the nature of chat service communications. As such, the text data may be conversational language that includes errors such as misspellings, incorrect grammar, capitalization or punctuation errors, or formatting errors, among others. Moreover, conversational text data also contains a high degree of variability, as users can use different expressions, words, phrases or even emojis to express the same sentiment. This variability and ambiguity can make it challenging to extract meaningful insights from the data, as well as to train and improve the performance of machine-learning models that are used for natural language processing using conventional techniques. This text data is referred to herein as "noisy" text data, because it lacks standardized language characteristics of text data in more formal contexts (e.g., includes a larger number of errors or inconsistencies). Additionally, one or more of the data sources 160 may store email data, which may include conversational language that is similar in format (e.g., noisy text format), but is longer in length than the text from individual chat logs. The techniques described herein can be utilized to train machine-learning models (e.g., the machine-learning model(s) 150) using noisy text data to improve the accuracy for travel-specific machine-learning tasks.

Additional data sources 160 may store text data in a standardized text format. For example, one or more of the data sources 160 can host a website or multiple webpages using a webserver. A data source 160 can host one or more websites that present text data related to particular topics, including travel data. This text data can be scraped by the data processing systems 105, as described herein. In some implementations, the data source 160 that hosts webpages with travel-related text data can execute web server software such as Apache or Nginx, which can be used to serve web pages to the user devices 160 or other computing devices via the network 110. The web pages can include retrievable data such as HTML, CSS, and JavaScript, which can be utilized to format and present the text data of the website. This text data can be extracted from the HTML, CSS, and/or JavaScript code using a scraping process.

Data sources 160 that host such websites may be maintained by any type of entity that maintains travel-related data in a standardized format, including online travel agencies, airline and hotel booking entities, travel review services, travel blogs and forums, car rental companies, travel itinerary planning and management services, destination guides and information services, weather and climate services, and public transportation and route planning services, among others. The text data hosted by such data sources 160 may be formatted in a standardized text format. The text stored as a standardized text format may be text data that is formal in nature (e.g., a formal review, blog post, or professional piece of writing, etc.) and therefore lacks the errors and inconsistencies of the noisy text data. Text having a standardized format may have proper spelling, grammar, formatting, punctuation, and capitalization. Text having the standardized text format is text data where most of the data has a standardized ontology, such as having proper spelling and grammar corresponding to one or more languages.

In some implementations, one or more of the data sources 160 that maintain chat logs or otherwise store noisy text data may also host one or more websites that present standardized text data. Additionally, the noisy data may include additional text data from social media sources (e.g., profile pages, text messages, social media posts, etc.). Examples of social media sources include Twitter posts, Reddit posts, Facebook posts, or the like. Text data having the noisy text format can include any text with a free-flowing or less organized form, which may or may not conform to various ontological norms of one or more languages. The data

Referring now to the operations of the data processing system 105, the training set generator can maintain a dataset of standardized text data 125 and a dataset of noisy text data 130. Both the standardized text data 125 and the noisy text data 130 can include keywords, phrases, sentences, paragraphs, or passages with text corresponding to a travel-specific lexicon. The training set generator 135 can generate, update, or otherwise store the standardized text data and the noisy text data by accessing one or more of the data sources 160 via the network. For example, the training set generator 135 can transmit one or more queries for up-to-date text data from one or more data sources 160 that host or otherwise provide chat bots or chat services.

The training set generator 135 can maintain the dataset of standardized text data 125 by scraping one or more webpages or information resources hosted by one or more of the data sources 160. For example, the training set generator 135 can scrape files, directories, web-based interfaces, application data, databases, or other repositories of information hosted by one or more of the data sources 160 to retrieve one or more portions of the standardized text data 125 having the standardized text format. The standardized text data 125 may be text data that is formal in nature (e.g., a formal review, blog post, or professional piece of writing, etc.) and therefore lacks errors and inconsistencies. The standardized text data 125 can be stored as one or more sentences, which may be stored in order and in association with an identifier of the location from which the sentences were scraped. The location may be an article, a travel review, or a blog post, among other information resources. The standardized text data 125 can additionally or alternatively be received, retrieved, or accessed from any data source 160 that maintains standardized travel-specific language, and may itself be a previously compiled travel training data set generated based in whole or in part on standardized training data maintained by one or more data sources 160.

Scraping can include extracting text data in the standardized text format from a website or database hosted on by one or more of the data sources 160. To identify the relevant text data from information resources to extract, the training set generator 135 can parse one or more information resources according to a file format of the information resource. For example, the training set generator 135 can parse hypertext markup language (HTML), extensible markup language (XML), or JavaScript code of a webpage, or can iterate through each entry in a database to determine the structure of the data hosted by the data source 160 and how it is organized. Once the structure and format of the text data hosted by the data source 160 have been identified, the training set generator 135 can extract the text having the standardized text format by copying the standardized text from the information resource to one or more data structures in the memory of the data processing system 105. To do so, the training set generator 135 can transmit one or more requests (e.g., hypertext transport protocol (HTTP) or secure HTTP (HTTPS) requests, file transfer protocol (FTP) requests, database queries, etc.) to the data source 160 to retrieve the HTML, XML, JavaScript code of a webpage or information resource, or database entries. In some implementations, the scraping process can include receiving training data 140 (e.g., which may have been generated from various web pages or other information sources) from one or more data sources 160. Scraping can include any process in which the training data 140, or data that may be utilized to generate the training data 140, is received, retrieved, or otherwise accessed by the training set generator 135. The

The training set generator 135 can utilize similar techniques to access one or more chat logs maintained by one or more data sources 160 to retrieve the noisy text data 130, which has the noisy text format. To do so, the training set generator 135 can transmit one or more request to data sources 160 that maintain noisy text data 130, which may include data sources 160 that host or maintain chat bots, chat services, or chat logs. The training set generator 135 can further access one or more data sources that that host, maintain, or otherwise store email data corresponding to travel-related communications. The email data may be text from the body of one or more email conversations, which may include conversational language that is similar in format (e.g., noisy text format), but is longer in length than the text from individual chat logs. Chat logs can include text data from chat conversations between users and chat bots or agents, which may be stored by one or more data sources 160 in a database or file system for retrieval by the training set generator 135. The chat logs can include text data related to travel-specific contexts, and may be maintained by entities such as travel agencies, hotel companies, and/or transportation companies (e.g., airports, train stations, bus travel services, etc.), among other travel-related entities.

The noisy text data 130 can additionally or alternatively be received, retrieved, or accessed from any data source 160 that maintains noisy travel-specific language, and may itself be a previously compiled travel training data set generated based in whole or in part on standardized training data maintained by one or more data sources 160. For example, the noisy text data 130 may, at least in part, be received, retrieved, or accessed from one or more social media websites, and may include data from social media posts, social media threads, forum posts, discussion boards, mailing lists, email chains, or other sources of conversational data. The training set generator 135 can update the noisy text data 130 with additional noisy data as it is received or retrieved from the data sources 160, such that the noisy text data 130 includes up-to-date data for training the machine-learning model 150. Example sources of noisy text data 130 include social media posts (e.g., Twitter posts, Facebook posts, Reddit posts, etc.). In some implementations, the training set generator 135 can initiate training, retraining, or tuning of the machine-learning model 150 upon receiving and storing additional up-to-date noisy text data 130 and generating corresponding training data 140 for one or more training objectives as described herein.

The training set generator 135 can continuously or periodically request, poll, or otherwise receive updated standardized text data 125 and noisy text data 130 from the data sources 160. For example, the training set generator 135 can use scraping techniques or data retrieval techniques to periodically send requests to the data sources 160 and retrieve any additional or updated standardized text data 125 and noisy text data 130. The frequency at which the requests are sent can be adjusted based on the rate at which additional text data is generated, or may be determined according to a retrieval policy implemented by the training set generator 135. In some implementations, the training set generator 135 can utilize one or more application programming interfaces (APIs) of one or more data sources 160 to retrieve information. For example, one or more of the data sources 160 can provide APIs that allow for programmatic access to their data, and these APIs can be used to continuously or periodically retrieve additional text data as it is generated at the data sources 160. For example, a data source may provide an API endpoint that returns additional text data every time it is accessed, or it may provide a way to subscribe to or otherwise receive indications when additional text data is generated. In some implementations, one or more data sources 160 can utilize APIs to transmit additional text data to the training set generator 135, instead of the training set generator 135 polling or requesting data from the data sources 160.

The training set generator 135 can generate the training data 140 using the standardized text data 125 and the noisy text data 130. In some implementations, the training data 140 may include a first training set corresponding to a first training objective and a second training set corresponding to a second training objective. The first training objective can be an MLM training objective. To generate the training data 140, which may be utilized to train the machine-learning model 150, the training set generator 135 can pre-process the standardized text data 125 and the noisy text data 130 to remove any irrelevant or duplicate content, and to standardize formatting and encoding.

For the MLM training objective, the training set generator 135 can generate training examples using both the standardized text data and the noisy text data. To do so, the training set generator 135 randomly masks a percentage of the words in each sentence from the standardized text data 125 and/or the noisy text data 130. When generating the data for the first training set, the text in each sentence can be tokenized and subsequently randomly masked. Masking tokens in the first training set can include replacing one or more tokens with a mask token. Corresponding ground truth data, which includes the token(s) that were replaced with the mask token, is stored in association with each masked sentence in the first training set. In the case of noisy text, different units of text than sentences may be utilized (e.g., question and response, individual responses or messages, etc.). The percentage of masked words in each unit of text (e.g., sentence, message, etc.) that is provided as input to the machine-learning model 150 may be a parameter that is stored as an internal configuration setting, or may be provided as input to the training set generator 135 via user input or communications via the network 110.

The machine-learning model trainer 145 can train the machine-learning model 150 according to a variety of training objectives. Different training objectives may each be associated with its own respective training set (e.g., as part of the training data 140). In some implementations, the training data 140 can be generated for multiple concurrent training objectives. For example, the training data 140 can be generated to include sentence pairs for next sentence prediction, and masked versions of the sentence pairs for concurrent MLM training. In some implementations, the training data 140 can first be generated for a first training objective, and once the machine-learning model trainer 145 has trained the machine-learning model 150 according to the first training objective, the training set generator 135 can modify the training data 140 to include data for a second training objective.

Although the examples that follow describes the machine-learning model trainer 145 training the machine-learning model 150 according to an MLM training objective and an NSP training objective, it should be understood that the machine-learning model 150 may be trained according to any number or type of training objective to achieve useful results. For example, in addition to the MLM training objective, in which a certain percentage of words in one or more sentences are masked, and the machine-learning model 150 is trained to predict the masked tokens, the machine-learning model 150 may be trained according to an NSP training objective, among other training objectives. Some non-limiting example training objectives for which the machine-learning model 150 may be trained include permuted sentence prediction, in which sentences are randomly permuted and the machine-learning model 150 is trained to predict the original order; sentiment analysis prediction, in which the machine-learning model 150 is trained to predict the sentiment of a given sentence; and named entity recognition (NER) prediction, in which the machine-learning model 150 is trained to predicting entity labels for named entities in a sentence; among others.

In the MLM training objective, the masked and unmasked words in each unit of text data are provided as input to the machine-learning model 150, which is trained using the techniques described herein to predict the masked words in the input text. In some implementations, the percentage of words or tokens to be masked can be varied as a configurable training parameter, and may be, for example, fifteen percent of the tokens in the dataset. The training data generated for the MLM objective can be stored as part of a first set of training data in the training data 140. The data in the first training set can be split into training and validation datasets, which can be used to train and evaluate the machine-learning model, as described herein.

For the NSP training objective, the training set generator 135 can generate sentence pairs using text data from the standardized text data 125 and the noisy text data 130. Different combinations of sentences having different formats can be generated. For example, the training set generator 135 can generate sentence pairs having a first sentence in the standardized text format and a second sentence in the noisy text format. The sentences for the NSP training objective can be generated according to predetermined proportions, such that a predetermined number of sentence pairs having at least one noisy sentence are generated. Training data generated for the NSP training objective can be stored as the second training set in the training data 140.

The goal for NSP is, given a first sentence and a second sentence, to predict whether the second sentence is the actual next sentence to the first sentence. As such, when generating the second training set, the training set generator 135 can generate training data with a predetermined number of sentence pairs where the second sentence is the actual next sentence to the first sentence in the standardized text data 125 or the noisy text data 130. The training set generator 135 can generate the rest of the pairs from random sentences coming from different documents or sources of information identified in the standardized text data 125 or the noisy text data 130. This sentence-level learning may be utilized to improve performance of the machine-learning model 140 on travel-related datasets, which may include a hybrid of noisy and standardized text data.

Because the travel-related data provided by the data sources 160 has a hybrid nature (e.g., including data having the standardized text format and the noisy text format), the training set generator 135 can generate sets of correctly paired sentences, in addition to random pairs of sentences from the standardized text data 125 and the noisy text data 130, including all possible combinations of each type of data. For example, the training set generator 135 can generate standard-noisy sentence pairs, where one sentence (e.g., first or second) comes from the standardized text data 125 and another sentence (e.g., the other of the first or second) comes from the noisy text data 130. The training set generator 135 can generate standard-standard sentence pairs, where the two sentences come from two different documents or information sources, but both include text from the standardized text data 125 (e.g., having the standardized text format). The training set generator 135 can generate noisy-noisy sentence pairs, where the two sentences come from two different chats, emails, or information sources, but both include text from the noisy text data 130 (e.g., having the noisy text format).

The correct sentence pairs (e.g., where the second sentence follows the first sentence as represented in the corresponding information resource from which the sentences were extracted) can be generated as noisy-noisy sentence pairs and/or standard-standard sentence pairs. The relative proportions of correct sentence pairs, incorrect sentence pairs, as well as the noisy-noisy sentence pairs, standard-noisy sentence pairs, and standard-standard sentence pairs in the training data 140 can be configurable parameters that are utilized by the training set generator 135 to generate the training data 140. When generating the sentence pairs, the text in each sentence can be tokenized and subsequently paired. To pair the sentences, the training set generator 135 can concatenate the tokenized first and second sentences such that the concatenated tokenized sentences are separated by a separator token, indicating the beginning of the second sentence and the end of the first sentence. During training of the machine-learning model 150, the mix of randomized pairs having noisy or standardized text data improves the ability of the machine-learning model 150 to differentiate between text having the standardized text format and the noisy text format and provide output with improved consistency and accuracy.

The machine-learning model trainer 145 can train the machine-learning model 150 using the training data 140, according to one or more training objectives. The training objectives can include MLM and NSP and may utilize the first training set and the second training set in the training data 140, respectively. In some implementations, the machine-learning model trainer 145 can perform training according to the MLM objective and the NSP objective sequentially. For example, machine-learning model trainer 145 can train the machine-learning model 150 using the first training set of the training data 140 according to the MLM objective, and subsequently train the machine-learning model 150 using the second training set according to the NSP training objective. In some implementations, the training data 140 can be a single set of training data that includes the features of both the first training set and the second training set. For example, rather than having a first training set with masked tokens and a second training set with sentence pairs, the training data 140 can include sets of tokenized sentence pairs generated as described herein, where tokens in each sentence pair are randomly replaced with mask tokens as described herein. In this example, the machine-learning model 150 can be trained according to the MLM and NSP training objectives concurrently, rather than sequentially. The ground truth data for such training data 140 includes both the classification of whether the second sentence is the true next sentence of the first sentence, and the values of any tokens that were replaced with mask tokens.

Training the machine-learning model 150 according to the MLM training objective includes training the machine-learning model 150 to predict the original token of an input sentence that was replaced by a mask token. When training the machine-learning model 150, the machine-learning model trainer 145 can provide each tokenized and masked sentence of the first training set as input to the machine-learning model 150. In some implementations, prior to providing the tokenized and masked sentences as input data for the machine-learning model 150, the tokenized and masked sentences can be concatenated with additional tokens to indicate the beginning and end of the sentence.

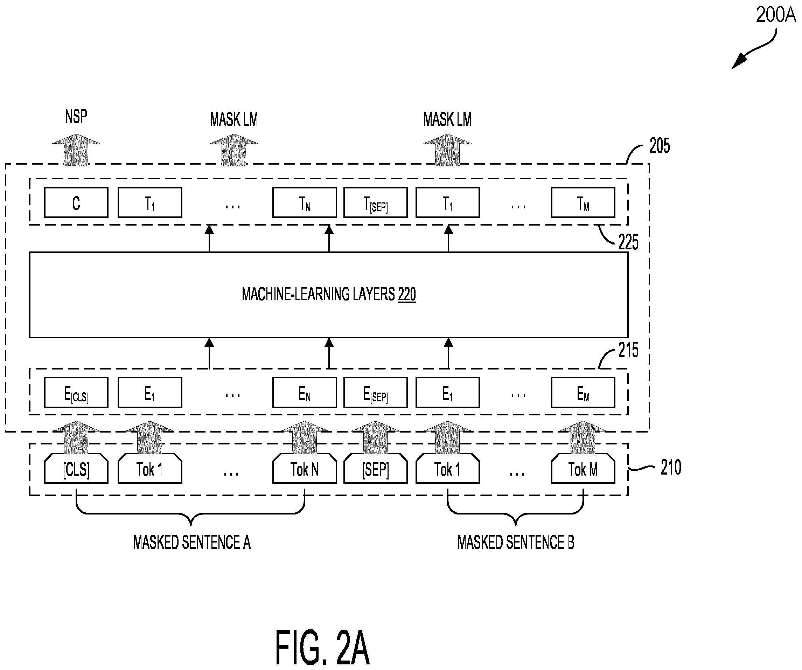

The machine-learning model 150 can then be executed using the input data, such that the input data is processed by each layer of the machine-learning model 150 (e.g., which are described in further detail in connection with FIG. 2A), and a predicted token is generated by the machine-learning model 150 for each mask token in the input data. The machine-learning model trainer 145 can compare the predicted tokens generated by the machine-learning model 150 to the actual ground-truth tokens stored in association with the input data in the first training set that were replaced by the mask token. The comparison can include the calculation of a loss value based on both the predicted token and the actual token. The loss value can represent the difference (e.g., an amount of error) between the predicted tokens and the actual tokens.

The machine-learning model trainer 145 can calculate the gradients of the loss with respect to the parameters of the machine-learning model 150 using backpropagation techniques. The machine-learning model trainer 145 can update the trainable parameters of the machine-learning model 150 using an optimization technique and a learning rate, such that the trainable parameters are updated in a direction that reduces the loss. The machine-learning model trainer 145 can repeat this process for multiple iterations, using different input data from the first training set each time. During the training process, the machine-learning model trainer 145 can evaluate the machine-learning model 150 on using the validation set in the training data 140 to measure the performance of the machine-learning model 150. The validation set can be a set of data similar to the input data in the first training set, but is held out and not used for training. The machine-learning model trainer 145 can terminate the training process once a predetermined training condition has been reached (e.g., the machine-learning model 150 has reached a satisfactory level of accuracy or precision, a certain number of training iterations has been performed, etc.).

Similar techniques can be utilized to train the machine-learning model 150 according to the NSP objective. When training for the NSP objective, the machine-learning model trainer 145 can utilize the second training set, which includes sentence pairs. In the NSP objective, the machine-learning model 150 is trained to predict, given a first sentence and a second sentence in a sentence pair, whether the second sentence is the actual next sentence to the first sentence. Both the tokenized first and second sentences, which are concatenated together in the second training set, can be provided as input to the machine-learning model 150, which can generate prediction indicating whether the second sentence followed the first sentence in the information resource from which the first and second sentences were extracted.

The input data in the second training set can be stored in association with ground truth data indicating whether the second sentence is the true next sentence of the first sentence (which can be generated during generation of the training data 140). Using techniques similar to those described above, the machine-learning model trainer 145 can calculate a loss value based on the ground truth data and the output of the machine-learning model 145, and update the trainable parameters of the machine-learning model 150 to minimize the loss using an optimization technique. In some implementations, the machine-learning model trainer 145 can train the machine-learning model 150 according to the MLM and NSP training objectives concurrently, rather than sequentially. To do so, training data with both tokenized and masked sentence pairs can be utilized as described herein. The ground truth data for such training data 140 includes both the classification of whether the second sentence is the true next sentence of the first sentence, and the values of any tokens that were replaced with mask tokens. This ground truth data can be compared to the next sentence prediction and the masked token predictions generated by the model in a single iteration to calculate the loss value, which is then utilized to update the trainable parameters of the machine-learning model 150 according to an optimization technique. Similar validation techniques to those described herein can be utilized to evaluate the accuracy and precision of the machine-learning model 150. Non-limiting example training parameters for an example training process of the machine-learning model 150 include a global batch size of 1360, a number of iterations equal to 900,000, and a maximum sequence length of 128.

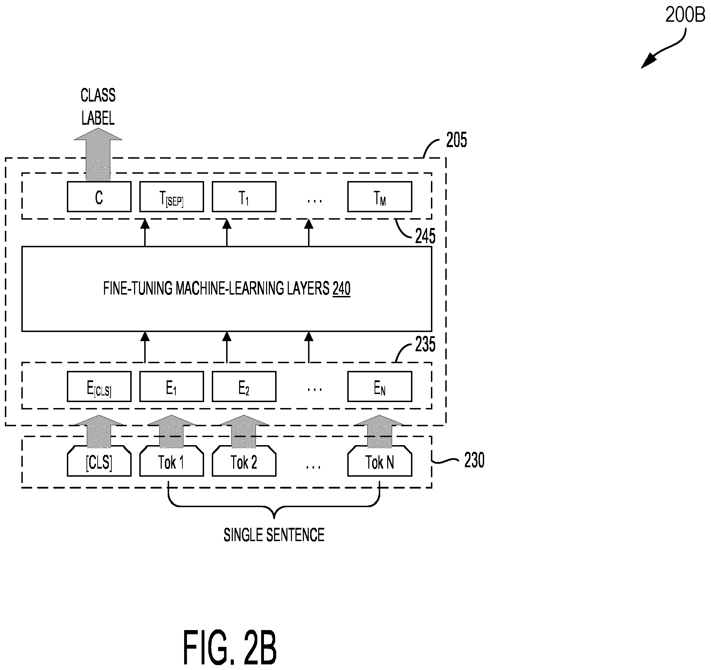

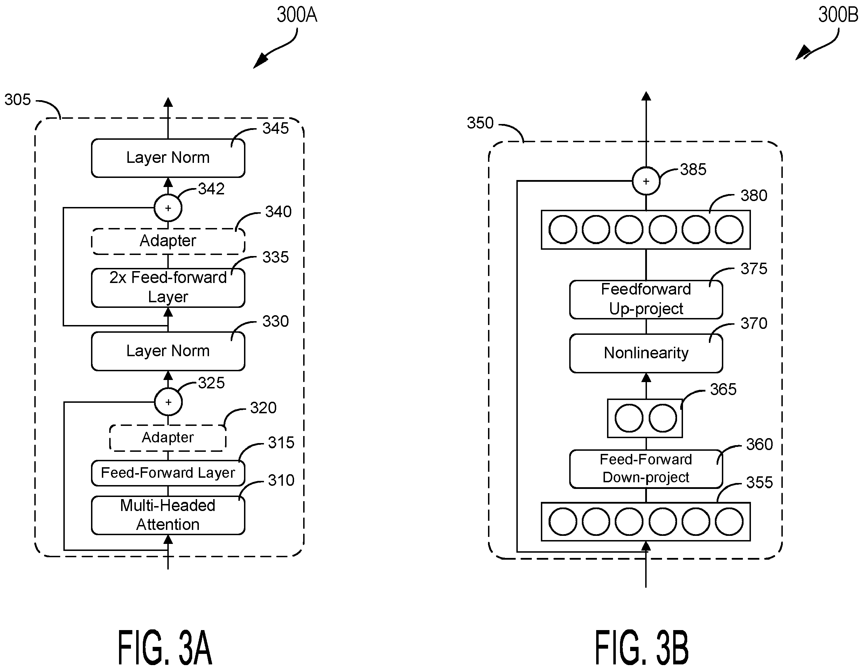

The machine-learning model trainer 145 can tune the trained machine-learning model 150 using a third training set according to a third training objective. After training, the trained parameters and structure of one or more layers of the machine-learning model 150 can be utilized with additional layers (e.g., fully connected layers, adapter layers, etc.) to tune the model for particular tasks. Both the NSP and MLM training techniques can train the machine-learning model 150 to recognize the context and meaning in text data, while the tuning process can further train the trained machine-learning model 150 to perform additional tasks, such as sentiment analysis, classification, or text generation, among others. The tuning process can include incorporating additional machine-learning layers into the trained machine-learning model 150 and utilizing additional training data tailored to specific machine-learning tasks. As such, the trained machine-learning model 150 can be utilized as a base model, which can be copied and utilized in additional machine-learning models 150 for travel-related tasks or functions. The structure of the machine-learning model 150 is described in connection with FIGS. 2A, 2B, 3A, and 3B.

Referring to FIG. 2A, depicted is a block diagram 200A of an architecture of an example machine-learning model 205 (e.g., the machine-learning model 150) during a training phase using the techniques described herein, in accordance with one or more implementations. The machine-learning model 205 may be a deep learning model, and may be trained according to deep learning training techniques, as described herein. As shown, the machine-learning model 205 receives tokenized sentence(s) 210 as input. In this example, the machine-learning model 205 is trained according to MLM and NSP concurrently, and as such, two masked sentences (converted to tokens, some of which are randomly replaced with mask tokens) are provided as input to the machine-learning model 205 during training. The tokenized sentence(s) 210 begin with a CLS token, and the end of the first sentence and the beginning of the second sentence is marked with a SEP token.

The machine-learning model 205 can include one or more embedding layers. The embedding layers convert the input tokens into continuous-valued vectors, referred to as the embeddings 215. The embeddings 215 can be provided as input to and processed by the subsequent machine-learning layers 220 of the machine-learning model 205. In some implementations, the embedding layers can be previously trained using a large corpus of text, or may be trained according to the training steps described herein concurrently with the machine-learning layers 220. In some implementations, the embeddings 215 include segment embeddings, which distinguish between the first and second sentences, and/or position embeddings, which represent the position of the input tokens within the input sequence. The position embeddings can be utilized to represent the relative position of the tokens with respect to each other.

The machine-learning model 205 can include one or more machine-learning layers 220, which can include multiple transformer encoder layers, such as the encoder layers described in connection with FIGS. 3A and 3B. The machine-learning model 205 can be a travel-specific natural language machine-learning model. The machine-learning model 205 can be any type of transformer model that processes natural language, for example. The encoder layers of the machine-learning layers 220 can receive and process the embeddings 215 generated by the embeddings layers to generate the output tokens 225. The machine-learning layers 220 can include, in a non-limiting example, anywhere from twelve to twenty-four transformer encoder layers, each of which can include a multi-head self-attention mechanism and a feed-forward neural network, for example. Further details of the transformer encoder layers are described in connection with FIGS. 3A and 3B. In some implementations, the machine-learning layers 220 include additional layers, such as fully connected layers, rectified linear unit (ReLU) layers, pooling layers, activation layers, or softmax layers, among others.

In some implementations, the transformer encoder layers or the machine-learning layers 220 include one or more adapter layers. The output tokens 225 generated by the machine-learning layers 220 can include a classification token, which indicates whether the second input sentence is predicted to be the next sentence of the first input sentence, and one or more predicted tokens for the masked tokens in the input sentences. The output tokens 225 of the machine-learning model 205, with ground truth data for the input, can be utilized to calculate a loss value and update the trainable parameters of the machine-learning model 205 during training, as described herein.

Referring to FIG. 2B depicts a block diagram 200B of an architecture of the example machine-learning model of FIG. 2A during a tuning phase, in accordance with one or more implementations. As shown, the machine-learning model 205 trained as shown in FIG. 2A can be copied and subsequently modified or otherwise utilized for tuning for particular applications. The machine-learning model 205, in this example, is shown as receiving a single sentence 230 as input, which is converted to a corresponding set of input embeddings 235 that are provided as input to the tuning machine-learning layers 240. The tuning machine-learning layers 240 can include the machine-learning layers 220 after training, and may also include one or more additional layers, such as adapter layers (e.g., the adapter layer 350 of FIG. 3B). The tuning process can be a supervised, semi-supervised, or self-supervised training process similar to the training processes described herein.

In some implementations, only the additional layers added to the machine-learning layers 220 (e.g., the adapter layers, other added layers) to create the tuning layers 240 are trained, while the trained machine-learning layers 220 are not updated during the tuning process. In some implementations, all (or a larger subset of) the trainable parameters of the tuning layers can be trained during tuning. Tuning can include training the machine-learning model on an additional dataset (e.g., a task-specific dataset), different from the training dataset, according to a specific training objective, such as sentiment analysis, sentence classification, named entity recognition, question-answering, summarization, or other types of applications. In some implementations, the output generated by the tuning layers 240 (shown here as the output tokens 245) can be provided as input to additional machine-learning layers, such as fully connected layers, convolutional neural network layers, softmax layers, ReLU layers, or activation layers, which are trained with the tuning machine-learning layers 240 provide the task-specific output.

Referring to FIG. 3A, depicted is a block diagram 300A of an architecture of an example transformer encoder layer 305 that may be utilized in implementations of the example machine-learning model 205 of FIGS. 2A and 2B, in accordance with one or more implementations. As shown, the encoder layer 305 can include a multi-head self-attention layer 310, a fully connected feed-forward layer 315, an addition operation 325, and a first normalization layer 330, two additional feed-forward layers 335, a second addition operation 342, and a second normalization layer 345. It should be understood that this non-limiting example structure of the transformer encoder layer 305 is provided for example purposes, and that the transformer encoder layer 305 can include any number, type, and arrangement of machine-learning layers. During tuning, optional adapter layers 320 and 340 can be added to the transformer encoder layer 305 in the positions shown. Details of the adapter layers 320 and 340 are described in connection with FIG. 3B.

The multi-head self-attention layer 310 can weight the importance of different parts of input data. The multi-head self-attention layer 310 can include multiple attention heads, each of which operates independently and includes parameters that are trained based on different aspects of the input data. Each attention head computes the attention weights for a specific subset of input embeddings. These attention weights are then combined to produce the final attention output. The combined attention weights generated by the multi-head attention layer 310 enable the machine-learning model (e.g., the machine-learning model 150) to be trained to recognize complex relationships between input embeddings.

The fully connected feed-forward layer 315 and the additional fully connected feed-forward layers 335 can be machine-learning layers wherein each neuron in the layer is connected to every neuron in the previous layer. Each neuron in a fully connected layer receives input from all neurons in the previous layer, applies a dot product with the corresponding weights of the respective neuron, and applies an optional and trainable bias value, if any, followed by an activation function. The output of a fully connected layer is then passed as input to the next layer in the transformer encoder 305. As shown, the fully connected feed-forward layer 315 is a single feed-forward layer that receives the output of the multi-head attention layer 310 and provides its output to the addition operation 325 or the optional adapter layer 320, if present. The additional fully connected feed-forward layers 335 include at least two feed-forward layers that receive the output of the normalization layer 330 and provide an output to the addition operation 342 or the optional adapter layer 340, if present. The feed-forward layer 315 and the additional feed forward layers 335 can include a non-linear activation function, such as ReLU.

In some implementations, the outputs of fully connected feed-forward layer 315 and additional fully connected feed-forward layers 335 can be applied to respective projection operations that map the feature size of the respective outputs back to the size of respective layer's input. The addition operation 325 can compute the sum of the output of the feed-forward layer 315 (or the adapter layer 320, if present), and the input to the encoder layer 305. The addition operation 342 can compute the sum of the output of the feed-forward layers 335 (or the adapter layer 340, if present), and the output of the normalization layer 330. The addition operations 325 and 342 can be element-wise addition operations, for example.

The normalization layer 330 can normalize the sum produced by the output of the addition operation 325, and the normalization layer 345 can normalize the sum produced by the output of the addition operation 342. In some implementations, each normalization layer 330 and 342 includes trainable normalization parameters. Normalization can be used to ensure that the input data has a consistent scale and distribution, which can improve the performance and stability of the encoder layer 305. The normalization layers 330 and 345 can normalize the activations of the previous layer, which reduces internal covariate shift. Although one encoder layer 305 is shown here, it should be understood that the machine-learning models described herein (e.g., the machine-learning model 150, the machine-learning model 205, etc.) may include any number of transformer encoder layers 305, which may execute sequentially, in parallel, or combinations thereof, to produce output data.

Referring to FIG. 3B, depicted is a block diagram 300B of an example adapter layer 350 that may be implemented as part of the transformer encoder layer 305 depicted in FIG. 3A, in accordance with one or more implementations. As shown, the input data 355 of the adapter layer 350 is provided as input to a feed-forward layer 360, which is structured to down-project the input data 355 to the intermediate data 365, which has a lower number of dimensions than the input data 355. The intermediate data 365 is provided to the nonlinearity layer 370 (e.g., an activation function such as ReLU, leaky ReLU, exponential linear unit (ELU), sigmoid, hyperbolic tangent, softmax, etc.). The output of the nonlinearity layer 370 is provided as input to a second feed-forward layer 375, which has a number of neurons that is structured to up-project the data from the dimensionality of the intermediate data 365 to produce the output data 380, which has the same dimensionality as the input data 355. The input data 355 and the output data 380 are provided as input to the addition operation 385, which computes the element-wise sum of both values and provides an output.

The adapter layer 350 can be inserted between different layers of the machine-learning models described herein to facilitate transfer learning. Transfer learning can be applied to the machine-learning models described herein following training, and can be utilized to efficiently tune the machine-learning model for task-specific objectives. Adapter layers provide additional trainable parameters that are trained on a task-specific dataset (e.g., a training set that is specific to the task for which the model is tuned), while all of the other trained parameters of the machine-learning model are held constant. This allows the network to be trained to adapt to the specific task without changing the entire architecture of the model, improving the efficiency of the tuning process by reducing the total number of parameters that are to be trained during tuning. Adapter layers also reduce the computational resources required for tuning, reduce overall training time, and improve the accuracy and precision of the trained model on the specific task for which the machine-learning model is tuned.

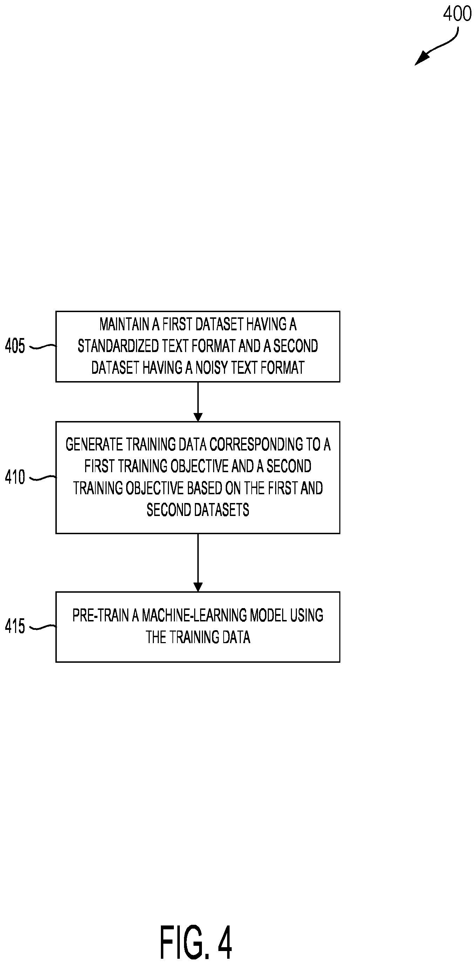

FIG. 4 depicts a flowchart of an example method 400 of training machine-learning models using a hybrid dataset including standard and noisy data, in accordance with one or more implementations. Although the operations of the method 400 are described as being performed by a data processing system (e.g., the data processing system 105), it should be understood that the method 400 may be executed using any suitable computing system (e.g., the data processing system 105 of FIG. 1, the computing system 500 of FIG. 5, etc.). It may be appreciated that certain steps of the method 400 may be executed in parallel (e.g., concurrently) or sequentially, while still achieving useful results.

The method 400 may include act 405, in which the data processing system can maintain a first dataset having a standardized text format (e.g., the standardized text data 125) and a second dataset having a noisy text format (e.g., the noisy text data 130). To maintain the first dataset, the data processing system can scrape one or more webpages or information resources hosted by one or more data sources (e.g., the data sources 160). For example, the data processing system can scrape files, directories, web-based interfaces, application data, databases, or other repositories of information hosted by one or more of the data sources to retrieve one or more portions of the standardized text data having the standardized text format. The standardized text data can have a standardized text format and may be text data that is formal in nature (e.g., a formal review, blog post, or professional piece of writing, etc.) and therefore lacks errors and inconsistencies. The standardized text data can be stored as one or more sentences, which may be stored in order and in association with an identifier of the location from which the sentences were scraped. The location may be an article, a travel review, or a blog post, among other information resources.

The data processing system can utilize similar techniques to access one or more chat logs maintained by one or more data sources to retrieve the noisy text data, which has the noisy text format. To do so, the data processing system can transmit one or more request to data sources that maintain noisy text data, which may include data sources that host or maintain chat bots, chat services, or chat logs. The data processing system can further access one or more data sources that that host, maintain, or otherwise store email data corresponding to travel-related communications. The email data may be text from the body of one or more email conversations, which may include conversational language that is similar in format (e.g., noisy text format), but is longer in length than the text from individual chat logs. Chat logs can include text data from chat conversations between users and chat bots or agents, which may be stored by one or more data sources in a database or file system for retrieval by the data processing system. The chat logs can include text data related to travel-specific contexts, and may be maintained by entities such as travel agencies, hotel companies, and/or transportation companies (e.g., airports, train stations, bus travel services, etc.), among other travel-related entities.

The method 400 may include act 410, in which the data processing system can generate training data corresponding to a first training objective and a second training objective based on the first and second datasets. The first training objective can be an MLM training objective. To generate the training data, the data processing system can pre-process the standardized text data and the noisy text data to remove any irrelevant or duplicate content and standardize formatting and encoding. Because the travel-related data provided by the data sources has a hybrid nature (e.g., including data having the standardized text format and the noisy text format), the data processing system can generate sets of correctly paired sentences, in addition to random pairs of sentences from the standardized text data and the noisy text data, including all possible combinations of each type of data.

For example, the data processing system can generate standard-noisy sentence pairs, where one sentence (e.g., first or second) comes from the standardized text data and another sentence (e.g., the other of the first or second) comes from the noisy text data. The data processing system can generate standard-standard sentence pairs, where the two sentences come from two different documents or information sources, but both include text from the standardized text data (e.g., having the standardized text format). The data processing system can generate noisy-noisy sentence pairs, where the two sentences come from two different chats, emails, or information sources, but both include text from the noisy text data (e.g., having the noisy text format).

The correct sentence pairs (e.g., where the second sentence follows the first sentence as represented in the corresponding information resource from which the sentences were extracted) can be generated as noisy-noisy sentence pairs and/or standard-standard sentence pairs. The relative proportions of correct sentence pairs to incorrect sentence pairs, as well as the noisy-noisy sentence pairs, standard-noisy sentence pairs, and standard-standard sentence pairs in the training data, can be configurable parameters that are utilized by the data processing system to generate the training data. When generating the sentence pairs, the text in each sentence can be tokenized and subsequently paired. To pair the sentences, the data processing system can concatenate the tokenized first and second sentences such that the concatenated tokenized sentences are separated by a separator token, indicating the beginning of the second sentence and the end of the first sentence.

The data processing system can randomly mask a percentage of the words in each sentence pair to prepare the training data for the MLM training objective. As described herein, the text in each sentence can be tokenized. Subsequently, the data processing system can randomly replace one or more tokens in each sentence with a mask token and store the token that was replaced as part of the ground-truth data for the respective input. Corresponding ground truth data, which includes the token(s) that were replaced with the mask token and the next sentence classification, is stored in association with each masked sentence in the training data. In the case of noisy text, different units of text, other than sentences, may be utilized (e.g., question and response, individual responses or messages, etc.). In this example, the training data is generated such that the training process is performed using MLM and NSP concurrently, rather than sequentially. In some implementations, the training data can be generated to include a first training set, which includes training data specific to the MLM objective, and a second training set, which includes training data specific to the NSP objective.

The method 400 may include act 415, in which the data processing system can train a machine-learning model (e.g., the machine-learning model 150, the machine-learning model 205, etc.) using the training data. To train the machine-learning model, the data processing system can iterate through the training data generated in act 410 and select an item of input data (e.g., a masked, tokenized sentence pair). The data processing system can then execute the machine-learning model using the input data, such that the input data is processed by each layer of the machine-learning model. The machine-learning model can generate a predicted token for each mask token in the input data and generate a prediction of the next sentence classification. The data processing system can compare the predicted tokens generated by the machine-learning model to the actual ground-truth tokens stored in association with the input data in the first training set that were replaced by the mask token. The comparison can include the calculation of a loss value based on both the predicted token and the actual token. The loss value can represent the difference (e.g., an amount of error) between the predicted tokens and the actual tokens.

The data processing system can calculate the gradients of the loss with respect to the parameters of the machine-learning model using backpropagation techniques. The data processing system can update the trainable parameters of the machine-learning model using an optimization technique and a learning rate, such that the trainable parameters are updated in a direction that reduces the loss. The data processing system can repeat this process for multiple iterations, using different input data from the first training set each time. During the training process, the data processing system can evaluate the machine-learning model using the validation set in the training data to measure the performance of the machine-learning model. The validation set can be a set of data similar to the input data in the first training set, but is held out and not used for training. The data processing system can terminate the training process once a predetermined training condition has been reached (e.g., the machine-learning model has reached a satisfactory level of accuracy or precision, a certain number of training iterations has been performed, etc.).

The data processing system can tune the trained machine-learning model using a third training set according to a third training objective. After training, the trained parameters and structure of one or more layers of the machine-learning model can be utilized with additional layers (e.g., fully connected layers, adapter layers, etc.) to tune the model for particular tasks. Both the NSP and MLM training techniques can train the machine-learning model to recognize the context and meaning in text data, while the tuning process can further train the trained machine-learning model to perform additional tasks, such as sentiment analysis, classification, or text generation, among others. The tuning process can include incorporating additional machine-learning layers into the trained machine-learning model, and utilizing additional training data tailored to specific machine-learning tasks. As such, the trained machine-learning model can be utilized as a base model, which can be copied and utilized in additional machine-learning models for travel-related tasks or functions.

FIG. 5 illustrates a component diagram of an example computing system suitable for use in the various implementations described herein, according to an example implementation. In a non-limiting example, the computing system 500 may implement any of the data processing system 105, one or more data sources 160, or one or more user devices 120 of FIG. 1, or various other example systems and devices described in the present disclosure.

The computing system 500 includes a bus 502 or other communication component for communicating information and a processor 504 coupled to the bus 502 for processing information. The computing system 500 also includes main memory 506, such as a RAM or other dynamic storage device, coupled to the bus 502 for storing information, and instructions to be executed by the processor 504. Main memory 506 may also be used for storing position information, temporary variables, or other intermediate information during execution of instructions by the processor 504. The computing system 500 may further include a ROM 508 or other static storage device coupled to the bus 502 for storing static information and instructions for the processor 504. A storage device 510, such as a solid-state device, magnetic disk, or optical disk, is coupled to the bus 502 for persistently storing information and instructions.

The computing system 500 may be coupled via the bus 502 to a display 514, such as a liquid crystal display, or active matrix display, for displaying information to a user. An input device 512, such as a keyboard including alphanumeric and other keys, may be coupled to the bus 502 for communicating information and command selections to the processor 504. In another implementation, the input device 512 has a touch screen display. The input device 512 may include any type of biometric sensor or a cursor control, such as a mouse, a trackball, or cursor direction keys, for communicating direction information and command selections to the processor 504 and for controlling cursor movement on the display 514.

In some implementations, the computing system 500 may include a communications adapter 516, such as a networking adapter. Communications adapter 516 may be coupled to bus 502 and may be configured to enable communications with a computing or communications network or other computing systems. In various illustrative implementations, any type of networking configuration may be achieved using communications adapter 516, such as wired (e.g., via Ethernet), wireless (e.g., via Wi-Fi, Bluetooth), satellite (e.g., via GPS) pre-configured, ad-hoc, LAN, WAN, and the like. The communication adapter 516 can enable communication via the network 110 of FIG. 1, for example.

According to various implementations, the processes of the illustrative implementations that are described herein may be achieved by the computing system 500 in response to the processor 504 executing an implementation of instructions contained in main memory 506. Such instructions may be read into main memory 506 from another computer-readable medium, such as the storage device 510. Execution of the implementation of instructions contained in main memory 506 causes the computing system 500 to perform the illustrative processes described herein. One or more processors in a multi-processing implementation may also be employed to execute the instructions contained in main memory 506. In alternative implementations, hard-wired circuitry may be used in place of or in combination with software instructions to implement illustrative implementations. Thus, implementations are not limited to any specific combination of hardware circuitry and software.

The implementations described herein have been described with reference to drawings. The drawings illustrate certain details of specific implementations that implement the systems, methods, and programs described herein. Describing the implementations with drawings should not be construed as imposing on the disclosure any limitations that may be present in the drawings.

It should be understood that no claim element herein is to be construed under the provisions of 35 U.S.C. § 112(f), unless the element is expressly recited using the phrase "means for."

As used herein, the term "circuit" may include hardware structured to execute the functions described herein. In some implementations, each respective "circuit" may include machine-readable media for configuring the hardware to execute the functions described herein. The circuit may be embodied as one or more circuitry components including, but not limited to, processing circuitry, network interfaces, peripheral devices, input devices, output devices, sensors, etc. In some implementations, a circuit may take the form of one or more analog circuits, electronic circuits (e.g., integrated circuits (IC), discrete circuits, system on a chip (SOC) circuits), telecommunication circuits, hybrid circuits, and any other type of "circuit." In this regard, the "circuit" may include any type of component for accomplishing or facilitating achievement of the operations described herein. In a non-limiting example, a circuit as described herein may include one or more transistors, logic gates (e.g., NAND, AND, NOR, OR, XOR, NOT, XNOR), resistors, multiplexers, registers, capacitors, inductors, diodes, wiring, and so on.

The "circuit" may also include one or more processors communicatively coupled to one or more memory or memory devices. In this regard, the one or more processors may execute instructions stored in the memory or may execute instructions otherwise accessible to the one or more processors. In some implementations, the one or more processors may be embodied in various ways. The one or more processors may be constructed in a manner sufficient to perform at least the operations described herein. In some implementations, the one or more processors may be shared by multiple circuits (e.g., circuit A and circuit B may comprise or otherwise share the same processor, which, in some example implementations, may execute instructions stored, or otherwise accessed, via different areas of memory). Alternatively or additionally, the one or more processors may be structured to perform or otherwise execute certain operations independent of one or more co-processors.

In other example implementations, two or more processors may be coupled via a bus to enable independent, parallel, pipelined, or multi-threaded instruction execution. Each processor may be implemented as one or more general-purpose processors, ASICs, FPGAs, GPUs, TPUs, digital signal processors (DSPs), or other suitable electronic data processing components structured to execute instructions provided by memory. The one or more processors may take the form of a single core processor, multi-core processor (e.g., a dual core processor, triple core processor, or quad core processor), microprocessor, etc. In some implementations, the one or more processors may be external to the apparatus, in a non-limiting example, the one or more processors may be a remote processor (e.g., a cloud-based processor). Alternatively or additionally, the one or more processors may be internal or local to the apparatus. In this regard, a given circuit or components thereof may be disposed locally (e.g., as part of a local server, a local computing system) or remotely (e.g., as part of a remote server such as a cloud based server). To that end, a "circuit" as described herein may include components that are distributed across one or more locations.

An exemplary system for implementing the overall system or portions of the implementations might include a general purpose computing devices in the form of computers, including a processing unit, a system memory, and a system bus that couples various system components including the system memory to the processing unit. Each memory device may include non-transient volatile storage media, non-volatile storage media, non-transitory storage media (e.g., one or more volatile or non-volatile memories), etc. In some implementations, the non-volatile media may take the form of ROM, flash memory (e.g., flash memory such as NAND, 3D NAND, NOR, 3D NOR), EEPROM, MRAM, magnetic storage, hard discs, optical discs, etc. In other implementations, the volatile storage media may take the form of RAM, TRAM, ZRAM, etc. Combinations of the above are also included within the scope of machine-readable media. In this regard, machine-executable instructions comprise, in a non-limiting example, instructions and data, which cause a general-purpose computer, special purpose computer, or special purpose processing machines to perform a certain function or group of functions. Each respective memory device may be operable to maintain or otherwise store information relating to the operations performed by one or more associated circuits, including processor instructions and related data (e.g., database components, object code components, script components), in accordance with the example implementations described herein.

It should also be noted that the term "input devices," as described herein, may include any type of input device including, but not limited to, a keyboard, a keypad, a mouse, joystick, or other input devices performing a similar function. Comparatively, the term "output device," as described herein, may include any type of output device including, but not limited to, a computer monitor, printer, facsimile machine, or other output devices performing a similar function.

It should be noted that although the diagrams herein may show a specific order and composition of method steps, it is understood that the order of these steps may differ from what is depicted. In a non-limiting example, two or more steps may be performed concurrently or with partial concurrence. Also, some method steps that are performed as discrete steps may be combined, steps being performed as a combined step may be separated into discrete steps, the sequence of certain processes may be reversed or otherwise varied, and the nature or number of discrete processes may be altered or varied. The order or sequence of any element or apparatus may be varied or substituted according to alternative implementations. Accordingly, all such modifications are intended to be included within the scope of the present disclosure as defined in the appended claims. Such variations will depend on the machine-readable media and hardware systems chosen and on designer choice. It is understood that all such variations are within the scope of the disclosure. Likewise, software and web implementations of the present disclosure could be accomplished with standard programming techniques with rule-based logic and other logic to accomplish the various database searching steps, correlation steps, comparison steps, and decision steps.

While this specification contains many specific implementation details, these should not be construed as limitations on the scope of any inventions or of what may be claimed, but rather as descriptions of features specific to particular implementations of the systems and methods described herein. Certain features that are described in this specification in the context of separate implementations may also be implemented in combination in a single implementation. Conversely, various features that are described in the context of a single implementation may also be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

Having now described some illustrative implementations and implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements, and features discussed only in connection with one implementation are not intended to be excluded from a similar role in other implementations.

The phraseology and terminology used herein is for the purpose of description and should not be regarded as limiting. The use of "including," "comprising," "having," "containing," "involving," "characterized by," "characterized in that," and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act, or element may include implementations where the act or element is based at least in part on any information, act, or element.

Any implementation disclosed herein may be combined with any other implementation, and references to "an implementation," "some implementations," "an alternate implementation," "various implementation," "one implementation," or the like are not necessarily mutually exclusive and are intended to indicate that a particular feature, structure, or characteristic described in connection with the implementation may be included in at least one implementation. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms.

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

The foregoing description of implementations has been presented for purposes of illustration and description. It is not intended to be exhaustive or to limit the disclosure to the precise form disclosed, and modifications and variations are possible in light of the above teachings or may be acquired from this disclosure. The implementations were chosen and described in order to explain the principals of the disclosure and its practical application to enable one skilled in the art to utilize the various implementations and with various modifications as are suited to the particular use contemplated. Other substitutions, modifications, changes, and omissions may be made in the design, operating conditions and implementation of the implementations without departing from the scope of the present disclosure as expressed in the appended claims.

## Claims

1. A method, comprising:
maintaining, by one or more processors, a first dataset having a standardized text format and a second dataset having a noisy text format, each of the first dataset and the second dataset corresponding to a travel-specific lexicon;
generating, by the one or more processors, training data corresponding to one or more training objectives based on the first dataset and the second dataset; and
training, by the one or more processors, a travel-specific natural language machine-learning model using the training data according to the one or more training objectives.

2. The method of claim 1, further comprising tuning, by the one or more processors, the travel-specific natural language machine-learning model using an additional training set according to a third training objective.

3. The method of claim 1 or 2, wherein maintaining the first dataset comprises scraping, by the one or more processors, a plurality of webpages hosted by one or more data sources to retrieve data having the standardized text format.

4. The method of claim 1, 2 or 3, wherein maintaining the second dataset comprises accessing, by the one or more processors, one or more chat logs, social media sources, or peer-to-peer communications maintained by one or more data sources to retrieve data having the noisy text format.

5. The method of any preceding claim, wherein a first training objective is masked-language modeling (MLM) and a second training objective is next sentence prediction (NSP).

6. The method of any preceding claim, wherein training the travel-specific natural language machine-learning model comprises:
training, by the one or more processors, the travel-specific natural language machine-learning model using a first training set according to the first training objective; and
subsequently training, by the one or more processors, the travel-specific natural language machine-learning model using a second training set according to the second training objective.

7. The method of any preceding claim, wherein training the travel-specific natural language machine-learning model comprises:
training, by the one or more processors, using the training data, the travel-specific natural language machine-learning model according to a first training objective and a second training objective concurrently.

8. The method of any preceding claim, wherein the travel-specific natural language machine-learning model comprises a deep learning model.

9. The method of any preceding claim, wherein generating the training data comprises generating, by the one or more processors, a plurality of sentence pairs using text data from the first dataset and the second dataset.

10. The method of claim 9, wherein the plurality of sentence pairs comprise a first pair having a first sentence in the standardized text format and a second sentence in the noisy text format.

11. The method of claim 9 or 10, wherein the plurality of sentence pairs comprise a first predetermined number of sentence pairs having at least one sentence in the noisy text format.

12. A system, comprising:
one or more processors coupled to non-transitory memory, the one or more processors configured to perform the method of any preceding claim.

13. A non-transitory computer-readable medium with instructions embodied thereon that, when executed by one or more processors, cause the one or more processors to perform the operations of any one of claims 1 to 11.
